# EUROPÄISCHE PATENTSCHRIFT

(11) **EP 3 138 826 B1**
(45) Veröffentlichungstag und Bekanntmachung des Hinweises auf die Patenterteilung: **17.10.2018**
(21) Anmeldenummer: 16184872.6
(22) Anmeldetag: 19.08.2016
(51) Int. Cl.: C04B 28/04, C04B 40/00, C04B 40/06, C04B 111/28

(54) **BAUSTOFFTROCKENMISCHUNG ENTHALTEND PYROGENE KIESELSÄURE UND DARAUS ERHÄLTLICHER BRANDSCHUTZPUTZ**
BUILDING MATERIAL DRY MIXTURE COMPRISING PYROLIZED SILICA, AND RESULTING FIRE PROTECTION PLASTER
MÉLANGE SEC CONTENANT SILICE PYROLYSE POUR MATÉRIAU DE CONSTRUCTION ET ENDUIT IGNIFUGÉ EN DÉCOULANT

(30) Priorität: 02.09.2015 DE 102015114656
(43) Veröffentlichungstag der Anmeldung: 08.03.2017
(73) Patentinhaber: Interbran Systems AG, 76344 Eggenstein-Leopoldshafen (DE)
(72) Erfinder: SCHÜMCHEN, Kurt, 53949 Dahlem (DE)
(74) Vertreter: Von Rohr Patentanwälte Partnerschaft mbB

(56) Entgegenhaltungen:
- EP-A1- 2 690 078
- WO-A1-2011/064005
- WO-A1-2012/085218
- WO-A1-2015/039843
- WO-A1-2015/090615
- WO-A2-2010/002934
- DE-A1- 19 725 761
- FR-A1- 2 900 653

## Beschreibung

Die vorliegende Erfindung betrifft das technische Gebiet des Brandschutzes, insbesondere des Brandschutzes von Spezialbauwerken, wie beispielsweise Industrieanlagen oder Tunneln.

Insbesondere betrifft die vorliegende Erfindung eine Baustofftrockenmischung, welche sich zur Herstellung eines neuartigen Brandschutzputzes eignet, und deren Verwendung.

Weiterhin betrifft die vorliegende Erfindung einen Brandschutzputz sowie seine Verwendung zur brandschutztechnischen Ausrüstung von Bauwerken.

Schließlich betrifft die vorliegende Erfindung ein aus dem erfindungsgemäßen Brandschutzputz erhältliches Brandschutzprofil und dessen Verwendung.

Dem Brandschutz kommt sowohl bei der Verhinderung von Bränden als auch bei deren Eindämmung und der Minderung von Brandfolgen große Bedeutung zu. So können durch geeignete Brandschutzmaßnahmen Unglücke mit hohen Sach- und Personenschäden oftmals vermieden werden.

Neben aktiven Systemen, wie beispielsweise Feuerlöscheinrichtungen, Sensoren oder Meldeeinrichtungen werden zur Eindämmung von Bränden bzw. zur Verhinderung ihrer raschen Ausdehnung insbesondere passive Systeme, wie beispielsweise der Einsatz brandhemmender bzw. schwer entflammbarer Materialien und spezieller Brandschutzverkleidungen, verwendet.

Der passive Brandschutz, insbesondere durch Verwendung schwer entflammbarer Materialien bzw. spezieller Brandschutzverkleidungen, spielt insbesondere bei Bauwerken auf Basis von Beton eine entscheidende Rolle, dies gilt besonders für Betonkonstruktionen mit Stahlbewehrungen bzw. Stahlarmierungen. Zwar ist Beton, insbesondere stahlbewehrter Beton, prinzipiell nicht brennbar, allerdings verliert der verbaute Stahl ab Temperaturen oberhalb von 500 °C seine Festigkeit und verformt sich, was zum Einsturz ganzer Gebäude führen kann.

Darüber hinaus wird auch der Beton selbst durch hohe Temperaturen angegriffen, da im Inneren des Betons vorhandenes Wasser verdampft, der Dampf jedoch nicht nach Außen dringen, d. h. nicht aus der Konstruktion herausgelangen kann. Dies führt dazu, dass Teile der Betonschicht abplatzen und der Beton regelrecht gesprengt wird. Mit der Zerstörung der geschlossenen Betonschicht geht auch deren wärmeisolierende Eigenschaft verloren, wodurch sich die Stahlbewehrung deutlich rascher erwärmt und die Stabilität der gesamten Konstruktion gefährdet ist.

Insbesondere bei Tunnelbränden werden durch den entstehenden Kamineffekt innerhalb kurzer Zeit sehr hohe Temperaturen von über 1.000 °C erreicht, was zu einer nachhaltigen Schädigung der gesamten Tunnelkonstruktion führen kann.

Da einerseits nach einer Reihe von verheerenden Bränden die Auflagen für den Brandschutz in Tunneln durch gesetzgeberische Maßnahmen stetig erhöht wurden und andererseits auch die ökonomischen Folgen der zerstörten Stahlbetonkonstruktionen gravierend sind, hat es im Stand der Technik nicht an Versuchen gefehlt, das Verhalten von Stahlbetonkonstruktionen, insbesondere im Tunnelbau, unter Hitzeeinwirkung zu verbessern.

So ist es beispielsweise im Tunnelbau möglich, dem Beton im Zuge der Herstellung Kunststofffasern, insbesondere Polypropylenfasern, zuzumischen. Die Kunststofffasern verdampfen unter großer Hitzeeinwirkung und bilden Risse und Poren im Beton, durch welche der im Brandfall entstehende Wasserdampf entweichen kann, ohne dass die Betonkonstruktion beschädigt oder zerstört wird. Auf diese Weise bleibt die wärmeisolierende Wirkung der Betonschicht zum Schutz der Stahlbewehrung mit Einschränkungen möglichst lange erhalten. Die Zumischung der Plastikfasern zu Beton hat jedoch den Nachteil, dass die im Brandfall entstehenden Risse und Poren im Beton dauerhaft erhalten bleiben, so dass die Betonkonstruktion gleichfalls aufwendig saniert werden muss, um beispielsweise das späte Eindringen von Wasser zu verhindern, was wiederum zu einer Beschädigung der Betonkonstruktion und der Stahlbewehrung führen würde.

In besonders brandsensiblen Bereichen, wie beispielsweise Tunneln, werden daher oftmals spezielle Beschichtungen, sogenannte Brandschutzputze, oder Konstruktionen aus Brandschutzprofilen, insbesondere Brandschutzplatten, eingesetzt, um eine Wärmeisolierung zwischen dem Brandherd und der Betonkonstruktion zu schaffen.

Die Verwendung von Brandschutzprofilen, insbesondere von Brandschutzplatten ist dabei der häufig beschrittene Weg, da durch die Verwendung von Brandschutzplatten eine besonders gute Wärmeisolierung erzielt werden kann. Nachteilig an der Verwendung von Brandschutzprofilen, insbesondere Brandschutzplatten, ist jedoch, dass die Profile an den Bauwerken, insbesondere an Tunneldecken und - wänden, mittels spezieller Konstruktionen aufwendig angebracht und dauerhaft fixiert werden müssen. Dies macht die Anbringung von Brandschutzprofilen einerseits sehr zeitaufwendig und andererseits auch sehr kostenintensiv.

Eine weitere Möglichkeit, das Verhalten von Betonkonstruktionen im Brandfall zu verbessern, ist die Aufbringung spezieller Brandschutzbeschichtungen, der sogenannten Brandschutzputze. Bei Brandschutzputzen handelt es sich oftmals um Putze auf mineralischer Basis, welche Leichtzuschläge, wie beispielsweise Vermiculit oder Perlit, enthalten und die wie übliche Deckputze auf das Bauwerk aufgebracht werden können.

Derartige Putzsysteme sind einfach und flexibel anzuwenden und im Vergleich zu Brandschutzprofilen mit deutlich geringen Kosten verbunden. Nachteilig an Brandschutzputzen ist jedoch, dass sie üblicherweise bei einer Schichtdicke von 6 bis 8 cm nur gegen Temperaturbelastungen bis 1.200 °C einen ausreichenden Schutz von Stahlbetonkonstruktionen gewährleisten können. Speziell bei Tunnelbränden, insbesondere wenn beispielsweise mit Öl oder Treibstoff beladene Tanklastzüge beteiligt sind, können jedoch innerhalb weniger Minuten Temperaturen von bis zu 1.400 °C auftreten. Bei Temperaturen von 1.350 °C bis 1.400 °C versagen allerdings gebräuchliche Brandschutzputze, so dass die Stahlbetonkonstruktion geschädigt wird.

Es besteht somit ein Bedürfnis nach geeigneten Brandschutzsystemen, welche einfach zu applizieren sind und auch bei sehr hohen Temperaturen, d. h. Temperaturen von bis zu 1.400 °C, bei vertretbarer Schichtdicke eine hervorragende wärmeisolierende Wirkung aufweisen.

Die WO 2015/039843 A1 betrifft eine Mischung aus Kieselsäure und mehr als 50 Gew.-% siliciumhaltiger Asche, die kein Perlit enthält, wobei die siliciumhaltige Asche bevorzugte Reisschalenasche und Silica Fume umfasst. Des Weiteren wird ein Verfahren zur Herstellung von Wärmedämmmaterialen durch Herstellung der Mischung und Einbringen der Mischung in eine Hülle beschrieben, wobei während des Verfahrens kein Sinterschritt erfolgt. Die Mischungen können insbesondere zu Vakuumisolationspanelen verarbeitet werden.

Weiterhin betrifft die EP 2 690 078 A1 eine maschinell aufbringbare, insbesondere spritzbare, feuerfeste Zusammensetzung, ein Verfahren zur Herstellung einer feuerfesten Beschichtung durch Aufspritzen einer spritzbaren feuerfesten Zusammensetzung, eine feuerfeste Beschichtung, erhältlich nach dem Verfahren, sowie einen Precursor der feuerfesten Zusammensetzung, aus welchem die spritzbare feuerfeste Zusammensetzung durch Mischen mit einem geeigneten Anteil an Wasser erhältlich ist.

Die WO 2012/085218 A1 betrifft ein feuerhemmendes Pulver, welches mindestens 30 Gew.-% einer Lewissäure, mindestens 5 Gew.-% eines Alkalibicarbonates und mindestens 3 Gew.-% Siliciumoxide aufweist. Die Pulver können in Baumaterialien verwendet werden, welche natürliche Fasern und mindestens 5 Gew.-% und höchstens 30 Gew.-% des feuerhemmenden Pulvers aufweisen.

Die WO 2011/064005 A1 betrifft ein Bindemittelsystem, welches mindestens ein latent hydraulisches Bindemittel, mindestens eine amorphe Kieselsäure, gegebenenfalls mindestens einen reaktiven Füllstoff und mindestens ein Alkalimetallsilikat aufweist. Das Bindemittelsystem soll eine Hybridmatrix formen, welche säurefest, wasserfest und alkaliresistent ist.

Darüber hinaus betrifft die FR 2 900 653 A1 eine Zusammensetzung zur Herstellung eines Materials zur Wärmeisolierung und zum Brandschutz, aufweisend mindestens einen Zement, ausgewählt aus Calciumaluminatzementen oder gebrannten Zementen, mindestens eine erste isolierende Komponente mit einer Porosität von mindestens 80 %, einem Schmelzpunkt von mindestens 1.100 °C und einer Wärmeleitfähigkeit von mindestens 0,1 W/(mK), wie beispielsweise Perlit, mindestens eine Faserkomponente, ausgewählt aus Wollastonitfasern, Quarzfasern, Basaltfasern oder Silikatfasern, und mindestens eine zweite isolierende Komponente, welche einen Schmelzpunkt von mindestens 1.200 °C aufweist, wie beispielsweise Keramikmikrohohlkugeln.

Weiterhin betrifft die WO 2010/002934 A2 eine Silikat-Zementmischung mit isolierenden, feuerhemmenden und hochtemperaturfesten Eigenschaften, welche Temperaturen von Umgebungstemperatur bis über 4.000 °F ohne Schäden an der Betonstruktur widerstehen kann. Zusätzlich zu den hervorragenden Temperatureigenschaften kann die Mischung sowohl als ultraleichter als auch schwerer Beton ausgebildet sein.

Weiterhin betrifft die DE 197 25 761 A1 ein Verfahren zur Herstellung und Verarbeitung einer feuerhemmenden Brandschutzbeschichtung für mineralische und metallische Oberflächen auf anorganischer Basis, welche frei von gesundheitsschädlichen Lösungsmitteldämpfen und Crackprodukten ist.

Schließlich betrifft die WO 2015/090615 A1 eine Baustofftrockenmischung, insbesondere einen Putzmörtel, enthaltend die Baustofftrockenmischung mindestens ein Aerogel, zur Herstellung eines Wärmedämmputzes.

Eine Aufgabe der vorliegenden Erfindung ist somit darin zu sehen, einen Brandschutzputz zur Verfügung zu stellen, welcher gegenüber Brandschutzputzen des Standes der Technik verbesserte Eigenschaften aufweist und die Nachteile des Standes der Technik vermeidet oder zumindest abschwächt.

Insbesondere ist es eine Aufgabe der vorliegenden Erfindung, einen Brandschutzputz bereitzustellen, welcher wie handelsübliche Putzsysteme auf die Oberflächen eines Bauwerks aufgetragen wird und auch bei Temperaturen bis zu 1.400 °C und darüber hervorragende Brandschutz- und wärmeisolierende Eigenschaften aufweist.

Gegenstand der vorliegenden Erfindung gemäß einem ersten Aspekt der vorliegenden Erfindung ist somit eine Baustofftrockenmischung, insbesondere zur Herstellung eines Brandschutzputzes nach Anspruch 1; weitere vorteilhafte Ausgestaltungen dieses Erfindungsaspekts sind Gegenstand der diesbezüglichen Unteransprüche.

Weiterer Gegenstand der vorliegenden Erfindung gemäß einem zweiten Aspekt der vorliegenden Erfindung ist die Verwendung einer Baustoffmischung, insbesondere eines Putzmörtels, zur Herstellung eines Brandschutzputzes.

Weiterer Gegenstand gemäß einem dritten Aspekt der vorliegenden Erfindung ist ein Brandschutzputz nach Anspruch 9; weitere vorteilhafte Ausgestaltungen des erfindungsgemäßen Brandschutzputzes sind Gegenstand der diesbezüglichen Unteransprüche.

Wiederum weiterer Gegenstand der vorliegenden Erfindung gemäß einem weiteren Aspekt der vorliegenden Erfindung ist die Verwendung eines Brandschutzputzes zur brandtechnischen Ausrüstung von Bauwerken nach Anspruch 13.

Wiederum weiterer Gegenstand der vorliegenden Erfindung gemäß einem wiederum weiteren Aspekt der vorliegenden Erfindung ist ein Brandschutzprofil nach Anspruch 14.

Schließlich ist wiederum weiterer Gegenstand der vorliegenden Erfindung die Verwendung eines Brandschutzprofils nach Anspruch 15.

Es versteht sich von selbst, dass Besonderheiten, Merkmale, Ausgestaltungen und Ausführungsformen sowie Vorteile oder dergleichen, welche nachfolgend - zu Zwecken der Vermeidung von unnötigen Wiederholungen - nur zu einem Erfindungsaspekt ausgeführt werden, selbstverständlich in Bezug auf die übrigen Erfindungsaspekte entsprechend gelten, ohne dass es einer ausdrücklichen Erwähnung bedarf.

Weiterhin versteht es sich von selbst, dass bei der nachfolgenden Angabe von Werten, Zahlen und Bereichen die diesbezüglichen Werte-, Zahlen- und Bereichsangaben nicht beschränkend zu verstehen sind; es versteht sich für den Fachmann vielmehr von selbst, dass einzelfallbedingt oder anwendungsbezogen von den angegebenen Bereichen bzw. Angaben abgewichen werden kann, ohne dass der Rahmen der vorliegenden Erfindung verlassen ist.

Zudem gilt, dass alle im Folgenden genannten Werte- bzw. Parameterangaben oder dergleichen grundsätzlich mit genormten bzw. standarisierten oder explizit angegebenen Bestimmungsverfahren oder mit dem Fachmann auf diesem Gebiet an sich geläufigen Bestimmungsmethoden ermittelt bzw. bestimmt werden können.

Darüber hinaus versteht es sich von selbst, dass alle gewichts- oder mengenbezogenen Prozentangaben vom Fachmann derart ausgewählt werden, dass in der Summe 100 % resultieren, dies versteht sich jedoch von selbst.

Dies vorausgeschickt wird im Folgenden die vorliegende Erfindung näher beschrieben.

Gegenstand der vorliegenden Erfindung - gemäß einem **ersten** Aspekt der vorliegenden Erfindung - ist somit eine Baustofftrockenmischung, insbesondere zur Herstellung eines Brandschutzputzes, wobei die Baustofftrockenmischung mindestens 20 Gew.-% Kieselsäure, bezogen auf die Baustofftrockenmischung, aufweist, wobei die Kieselsäure pyrogene Kieselsäure ist und Teilchengrößen im Bereich von 5 bis 250 µm aufweist, und wobei die Baustofftrockenmischung mindestens einen Leichtzuschlag enthält, wobei der Leichtzuschlag Korngrößen von höchstens 4 mm aufweist.

Wie sich überraschend herausgestellt hat, lassen sich durch die Zugabe von pyrogener Kieselsäure zu Baustofftrockenmischungen, welche zur Herstellung von Putzen geeignet sind, besonders leistungsfähige Brandschutzputze erhalten.

Die mit der erfindungsgemäßen Baustofftrockenmischung erhältlichen Brandschutzputze erlauben einen effektiven Brandschutz auch bei Temperaturen von bis zu 1.400 °C und darüber und eignen sich somit für den Einsatz als Brandschutz in speziellen Bauwerken, insbesondere Industrieanlagen oder Tunneln.

Die erfindungsgemäße Baustofftrockenmischung ist einfach und unkompliziert erhältlich, indem beispielsweise zumindest ein Teil der mineralischen Zuschläge, insbesondere der Leichtzuschläge, üblicher Brandschutzputze durch pyrogene Kieselsäure ersetzt wird.

Der mit der erfindungsgemäßen Baustofftrockenmischung herstellbare Brandschutzputz ist maschinell verarbeitbar und die Auftragsmenge bzw. die aufgetragene Schichtdicke kann individuell an die jeweiligen Erfordernisse angepasst werden. Die maschinelle Verarbeitbarkeit und speziell der Auftrag des Putzmörtels mittels Putzmaschinen ermöglicht eine sehr rasche Verputzung auch großer Flächen.

Der mit der erfindungsgemäßen Baustoffmischung erhältliche Putz, insbesondere Brandschutzputz, bindet gleichmäßig und schnell ab und neigt nicht zur Rissbildung.

Bei den im Rahmen der vorliegenden Erfindung unter der Bezeichnung Kieselsäuren zusammengefassten Verbindungen handelt es sich um Polykondensationsprodukte der Orthokieselsäure Si(OH)₄, deren Summenformeln bei fortschreitender Kondensation gegen SiO₂, d. h. Siliciumdioxid, konvergiert.

Die im Rahmen der vorliegenden Erfindung bevorzugt eingesetzten Kieselsäuren werden daher oftmals auch als Siliciumdioxide bezeichnet. Polykieselsäuren werden nach der Art ihrer Herstellung in Fällungskieselsäure - auch gefälltes Siliziumdioxid genannt - und pyrogene Kieselsäure - auch pyrogenes Siliziumdioxid genannt - unterteilt. Sowohl bei Fällungskieselsäuren als auch bei pyrogenen Kieselsäuren handelt es sich um synthetische amorphe Siliciumdioxide.

Fällungskieselsäure wird durch Polykondensationsreaktion von Natriumsilikatlösungen nach Ansäuern mit Mineralsäuren erhalten, wobei zuerst Wasserglas, das heißt eine wasserhaltige Polykieselsäure, entsteht, welche anschließend zu amorphen kolloidalen Teilchen kondensiert und getrocknet wird.

Pyrogene Kieselsäure wird durch Reaktion von Siliciumtetrachlorid SiCl4 in der Knallgasflamme, d. h. einem entzündeten Gemisch aus elementarem Wasserstoff und elementarem Sauerstoff, gebildet.

Sowohl Fällungskieselsäuren als auch pyrogene Kieselsäuren sind farblose Pulver mit einer niedrigen Schüttdichte und einer großen spezifischen Oberfläche. Fällungskieselsäuren und pyrogene Kieselsäuren werden oftmals für ähnliche Zwecke eingesetzt und finden Verwendung als Füllstoffe, beispielsweise zur Verbesserung der mechanischen Beständigkeit von Beschichtungen. Fällungskieselsäure und pyrogene Kieselsäure unterscheiden sich jedoch bei genauerer Betrachtung erheblich in ihren physikalischen und chemischen Eigenschaften, weshalb sie die Eigenschaften von Systemen, in welche sie inkorporiert werden, unterschiedlich beeinflussen. So ist pyrogene Kieselsäure üblicherweise mechanisch belastbarer als Fällungskieselsäure und besitzt eine höhere Dichte auf: Pyrogene Kieselsäure weist üblicherweise spezifische Oberflächen nach BET von 50 bis 600 m²/g und Dichten von ca. 2,2 g/cm³ auf. Die Primärpartikelgröße liegt üblicherweise zwischen 5 und 60 nm, während die Partikelgröße der aggregierten Primärpartikel üblicherweise im Bereich von 100 nm bis 100 µm schwankt.

Fällungskieselsäure weist hingegen eine spezifische Oberfläche nach BET im Bereich von 30 bis 800 m²/g bei einer Dichte von 1,9 bis 2,1 g/cm³ auf. Die Primärpartikelgröße zwischen 5 und 100 nm, während die Partikelgröße der agglomerierten Primärpartikel zwischen 1 und 50 µm beträgt. Alle spezifischen BET-Oberflächen werden im Rahmen der vorliegenden Erfindung nach DIN ISO 9277: 2003-05 bestimmt.

Im Rahmen der vorliegenden Erfindung wird es bevorzugt, wenn eine hydrophile Kieselsäure, vorzugsweise eine unmodifizierte hydrophile Kieselsäure verwendet wird. Hydrophile Kieselsäuren lassen sich leichter und homogener in die Baustofftrockenmischungen, insbesondere Putzmörtelsysteme einarbeiten, deren Bestandteile oftmals auch aus hydrophilen mineralischen Bestandteilen bestehen.

Unter einer hydrophilen Kieselsäure ist dabei im Rahmen der vorliegenden Erfindung eine Kieselsäure zu verstehen, welche möglichst wenige, vorzugsweise keine, organischen Gruppen, insbesondere keine Alkylgruppen, aufweist, sondern vorzugsweise mit polaren chemischen Gruppen, insbesondere Silanolgruppen, terminiert ist. Unter hydrophilen Substanzen werden üblicherweise polare organische oder anorganische Substanzen bezeichnet, welche gut mit Wasser mischbar sind. Dies gilt auch beispielsweise für feste Systeme, welche als hydrophil bezeichnet werden, wenn sie gut von Wasser benetzt werden.

Hydrophob modifizierte, üblicherweise auch als hydrophobe Kieselsäuren, bezeichnete Kieselsäuren sind mit organischen Gruppen, insbesondere mit Alkylsilanen, modifiziert, um die Hydrophilie, welche unmodifizierte Kieselsäure aufweist, herabzusetzen und beispielsweise die Kompatibilität der Kieselsäure mit organischen Systemen zu erhöhen. Der Einsatz hydrophober Kieselsäuren ist im Rahmen der vorliegenden Erfindung auch möglich, jedoch nicht bevorzugt, da die weiteren Bestandteile der erfindungsgemäßen Baustofftrockenmischung in der Regel hydrophil sind und darüber hinaus die Verwendung organischer Bestandteil im Brandfall zu deren Verbrennung führt, wodurch die Struktur und Funktion des erfindungsgemäßen Brandschutzputzes gefährden kann.

Im Rahmen der vorliegenden Erfindung wird pyrogene Kieselsäure verwendet. In den Versuchen der Anmelderin hat es sich gezeigt, dass durch die Verwendung pyrogener Kieselsäure eine deutliche Steigerung der Widerstandsfähigkeit des resultierenden Putzes gegenüber Bränden, insbesondere hohen Temperaturen, erreicht werden kann, wobei gleichzeitig eine bessere Wärmeisolierung erzielt wird.

Erfindungsgemäß enthält die Baustofftrockenmischung mindestens 20 Gew.-% Kieselsäure, bezogen auf die Baustofftrockenmischung.

Gleichermaßen kann es vorgesehen sein, dass die Baustofftrockenmischung die Kieselsäure in Mengen von 20 bis 60 Gew.-%, insbesondere 20 bis 50 Gew.-%, vorzugsweise 20 bis 45 Gew.-%, bevorzugt 20 bis 40 Gew.-%, bezogen auf die Baustofftrockenmischung, enthält. Insbesondere mit Kieselsäuregehalten in den vorgenannten Mengen können Brandschutzputze erhalten werden, welche auch bei Temperaturen von mindestens 1.400 °C ihre Schutzfunktion beibehalten.

Die im Rahmen der vorliegenden Erfindung eingesetzte Kieselsäure weist üblicherweise eine spezifische Oberfläche (BET) von mehr als 50 m²/g, insbesondere mehr als 60 m²/g, vorzugsweise mehr als 70 m²/g, besonders bevorzugt mehr als 80 m²/g, auf.

Gleichermaßen hat es sich in diesem Zusammenhang bewährt, wenn die Kieselsäure eine spezifische Oberfläche (BET) im Bereich von 50 bis 400 m²/g, insbesondere 60 bis 300 m²/g, vorzugsweise 70 bis 250 m²/g, bevorzugt 80 bis 200 m²/g, aufweist.

Üblicherweise weist die im Rahmen der vorliegenden Erfindung bevorzugt verwendete Kieselsäure wässrige Dispersion mit 4 Gew.-% Kieselsäure, bezogen auf die Dispersion, einen pH-Wert im Bereich von 3 bis 7, insbesondere 4 bis 6, auf.

Was nun die Teilchengrößen der verwendeten Kieselsäuren anbelangt, so kann diese naturgemäß gleichfalls in weiten Bereichen variieren. Im Rahmen der vorliegenden Erfindung ist es vorgesehen, dass die Kieselsäure Teilchengrößen im Bereich von 5 bis 250 µm, insbesondere 10 bis 200 µm, vorzugsweise 15 bis 180 µm, bevorzugt 20 bis 150 µm, besonders bevorzugt 25 bis 100 µm, aufweist. Kieselsäuren, insbesondere hydrophile pyrogene Kieselsäuren, mit den zuvor genannten Teilchengrößen können mit den übrigen Bestandteilen der erfindungsgemäßen Baustofftrockenmischung eine sehr dichte Packung bilden, d. h., die einzelnen Teilchen der Baustofftrockenmischung bzw. des resultierenden Brandschutzputzes sind so angeordnet, dass möglichst geringe Hohlräume zwischen ihnen entstehen. Darüber hinaus besitzen Kieselsäuren mit den zuvor genannten Teilchengrößen eine hervorragende mechanische Festigkeit und konnten auch größeren mechanischen Belastungen problemlos widerstehen, was die Strapazierfähigkeit und Belastbarkeit des resultierenden Brandschutzputzes bedeutend verbessert.

Gemäß einer bevorzugten Ausführungsform liegen die Kieselsäure als Granulat, insbesondere in Form von Agglomeraten, vor. Die bevorzugt im Rahmen der vorliegenden Erfindung eingesetzte Kieselsäure besteht somit aus Agglomeraten bzw. Aggregaten von Primärpartikeln. Durch die Verwendung von granulierter Kieselsäure lassen, lassen sich besonders geringe Wärmeleitfähigkeiten des erfindungsgemäßen Brandschutzputzes erreichen, da granulierte Kieselsäure im Vergleich zu feinteiliger Kieselsäure eine deutlich erhöhte Porosität und folglich eine geringere Wärmeleitfähigkeit aufweist.

Im Allgemeinen weist das Kieselsäuregranulat eine Stampfdichte im Bereich von 150 bis 350 g/l, vorzugsweise 200 bis 300 g/l, auf.

Im Allgemeinen weist die Baustofftrockenmischung mindestens einen Leichtzuschlag, insbesondere mit einer Kornrohdichte von höchstens 2,0 kg/dm³, auf. Derartige Leichtzuschläge, insbesondere auf Basis von geblähtem Perlit bzw. geblähtem Vermiculit, bilden üblicherweise den Hauptbestandteil von Brandschutzputzen. Vermiculit und Perlit sind mineralische Silikatgesteine, welche sich unter Hitzeeinwirkung schlagartig ausdehnen, so dass besonders leichte, hitzebeständige und mechanisch stabile Partikel erhalten werden, welche darüber hinaus auch bei höheren Temperaturen stabil sind.

Im Rahmen der vorliegenden Erfindung kann eine Vielzahl von Leichtzuschlägen in der erfindungsgemäßen Baustofftrockenmischung enthalten sein. Es hat sich jedoch bewährt, wenn der Leichtzuschlag ausgewählt ist aus der Gruppe von vulkanischem Gestein, Perlit, insbesondere geblähtem Perlit, Vermiculit, insbesondere geblähtem Vermiculit, Bims, Schaum- und Blähglas, Blähton, Blähschiefer, Tuff, Blähglimmer, Lavakies, Lavasand und deren Mischungen.

Besonders gute Ergebnisse werden erhalten, wenn der Leichtzuschlag ausgewählt ist aus Perlit und/oder Vermiculit, insbesondere geblähtem Perlit und/oder Vermiculit, wobei die Verwendung von Perlit, insbesondere geblähtem Perlit, besonders bevorzugt ist.

Es hat sich herausgestellt, dass besonders leistungsfähige Brandschutzputze erhalten werden können, wenn beispielsweise in üblichen Brandschutzputzen ein Teil der Leichtzuschläge, insbesondere des Vermiculits bzw. des Perlits, durch Kieselsäure ersetzt wird. Hierdurch kann sowohl die Temperaturbeständigkeit des Putzes als auch seine Schutzwirkung für eine beispielsweise darunter liegende Betonschicht von ca. 1.200 °C auf mindestens 1.400 °C erhöht werden.

Auch um die Dichte des erfindungsgemäßen Brandschutzputzes nicht zu hoch werden zu lassen, empfiehlt es sich stets mindestens einen Leichtzuschlag in der erfindungsgemäßen Baustofftrockenmischung zu belassen.

Es werden besonders leistungsfähige Putze erhalten, wenn sowohl ein Leichtzuschlag als auch Kieselsäure in der Baustofftrockenmischung enthalten ist. Für den Fall, dass in Brandschutzputzen nur Kieselsäure und kein Leichtzuschlag enthalten ist, werden immer noch sehr gute Ergebnisse erhalten, jedoch hat sich gezeigt, dass deutlich bessere Ergebnisse erzielt werden, sowohl im Hinblick auf die Widerstandsfähigkeit des Putzes als auch im Hinblick auf die Isolierwirkung des Brandschutzputzes, wenn sowohl Kieselsäure als auch mindestens ein Leichtzuschlag verwendet werden. Im Rahmen der vorliegenden Erfindung werden besonders dann gute Ergebnisse erhalten, wenn alle Bestandteile der Baustofftrockenmischung aufeinander abgestimmt sind.

Im Rahmen der vorliegenden Erfindung besitzt der Leichtzuschlag Korngrößen von höchstens 4 mm, insbesondere höchstens 3 mm. Durch die zuvor genannten Korngrößen des Leichtzuschlages ist gewährleistet, dass sich eine besonders dichte Packung mit den Kieselsäurepartikeln bildet. Hierdurch kann der Anteil an anorganischen, insbesondere mineralischen Füllstoffen, in der erfindungsgemäßen Baustofftrockenmischung und im Brandschutzputz sehr hoch sein, wobei der Bindemittelanteil gleichzeitig verringert werden kann, was zu besonders leistungsfähigem Brandschutz führt.

Was dann die Mengen anbelangt, in welchen die erfindungsgemäße Baustofftrockenmischung den Leichtzuschlag enthält, so können diese Mengen gleichfalls in weiten Bereichen variieren. Im Rahmen der vorliegenden Erfindung werden jedoch besonders gute Ergebnisse erhalten, wenn die Baustofftrockenmischung den Leichtzuschlag in Mengen von 5 bis 60 Gew.-%, insbesondere 10 bis 50 Gew.-%, vorzugsweise 15 bis 45 Gew.-%, bevorzugt 20 bis 40 Gew.-%, besonders bevorzugt 25 bis 35 Gew.-%, bezogen auf die Baustofftrockenmischung, aufweist.

Im Allgemeinen weist die Baustofftrockenmischung mindestens eine Bindemittelzusammensetzung auf, wobei die Baustofftrockenmischung vorzugsweise nur eine Bindemittelzusammensetzung aufweist. Die Bindemittelzusammensetzung dient der Verbindung zwischen den einzelnen Partikeln der Kieselsäure bzw. des Leichtzuschlages, um einen formstabilen Brandschutzputz herzustellen.

Im Rahmen der vorliegenden Erfindung hat es sich bewährt, wenn die Baustofftrockenmischung die Bindemittelzusammensetzung in Mengen von 5 bis 80 Gew.-%, insbesondere 15 bis 70 Gew.-%, vorzugsweise 30 bis 60 Gew.-%, bevorzugt 35 bis 55 Gew.-%, besonders bevorzugt 40 bis 50 Gew.-%, bezogen auf die Baustofftrockenmischung, enthält.

Besonders gute Ergebnisse werden erhalten, wenn die Bindemittelzusammensetzung mindestens ein zementbasiertes Bindemittel, vorzugsweise Zement, bevorzugt Portlandzement, besonders bevorzugt Weißzement, aufweist. Der Vorteil der Verwendung von zementbasierten Bindemitteln besteht darin, dass diese hydraulisch, d. h. durch Zugabe von Wasser, abbinden und besonders belastungsfähige und dauerhafte feste Systeme bilden.

In diesem Zusammenhang hat es sich bewährt, wenn die Bindemittelzusammensetzung das zementbasierte Bindemittel in Mengen von 1 bis 79 Gew.-%, insbesondere 3 bis 50 Gew.-%, vorzugsweise 5 bis 40 Gew.-%, bevorzugt 8 bis 30 Gew.-%, besonders bevorzugt 10 bis 25 Gew.-%, bezogen auf die Baustofftrockenmischung, enthält.

Gleichermaßen werden im Rahmen der vorliegenden Erfindung besonders gute Ergebnisse erhalten, wenn die Bindemittelzusammensetzung mindestens ein kalkbasiertes Bindemittel, insbesondere hydraulischen Kalk und/oder Kalkhydrat, vorzugsweise hydraulischen Kalk, aufweist. Bei Kalkhydrat handelt es sich um Calciumhydroxid Ca(OH)₂, welches durch Trockenadsorption aus Brandkalk (CaO) erhalten wird. Bei hydraulischem Kalk handelt es sich um Calciumhydroxid Ca(OH)₂, welches mit geringen Mengen eines hydraulischen Bindemittels, insbesondere Zement, versetzt ist.

Wenn die erfindungsgemäße Baustofftrockenmischung ein kalkbasiertes Bindemittel enthält, so hat es sich bewährt, wenn die Bindemittelzusammensetzung das kalkbasierte Bindemittel in Mengen von 1 bis 79 Gew.-%, insbesondere 5 bis 60 Gew.-%, vorzugsweise 10 bis 50 Gew.-%, bevorzugt 15 bis 45 Gew.-%, besonders bevorzugt 20 bis 40 Gew.-%, bezogen auf die Baustofftrockenmischung, enthält. Mit den zuvor genannten Mengen an zementbasiertem bzw. kalkbasiertem Bindemittel lassen sich besonders dauerhafte und stabile Brandschutzputze erhalten.

Gemäß einer bevorzugten Ausführungsform der vorliegenden Erfindung weist die Bindemittelzusammensetzung mindestens ein zementbasiertes Bindemittel und mindestens ein kalkbasiertes Bindemittel auf, insbesondere in den zuvor genannten Mengen.

Was das Verhältnis von zementbasiertem Bindemittel zu kalkbasiertem Bindemittel anbelangt, so kann dieses gleichfalls in weiten Bereichen variieren. Es hat sich jedoch herausgestellt, dass besonders widerstandsfähige und hervorragend wärmeisolierende Brandschutzputze erhalten werden, wenn die Bindemittelzusammensetzung ein gewichtsbezogenes Verhältnis von zementbasiertem Bindemittel zu kalkbasiertem Bindemittel im Bereich von 5 : 1 bis 1 : 10, insbesondere 3 : 1 bis 1 : 8, vorzugsweise 1 : 1 bis 1 : 5, bevorzugt 1 : 2 bis 1 : 3, aufweist.

Gemäß einer besonderen Ausführungsform der vorliegenden Erfindung weist die Baustofftrockenmischung einen Zuschlag aus dichtem Gestein, insbesondere mit einer Kornrohdichte von mindestens 2,2 kg/dm³, vorzugsweise mindestens 2,5 kg/dm³, auf. In diesem Zusammenhang hat es sich bewährt, wenn der Zuschlag aus dichtem Gestein ausgewählt ist aus der Gruppe von Quarzsand, Baryt, Magnetit, Hämatit, Metall- und Schwermetallschlacken, Flusskies, Flusssand, Splitt, Schotter und deren Mischungen.

Wenn die erfindungsgemäße Baustofftrockenmischung einen Zuschlag aus dichtem Gestein enthält, so besitzt dieser üblicherweise Korngrößen von höchstens 2 mm, insbesondere höchstens 1 mm. Ein Zuschlag aus schwerem Gestein kann prinzipiell verwendet, wird jedoch im Rahmen der vorliegenden Erfindung nicht bevorzugt, da sich die Brandschutzeigenschaften des resultierenden Brandschutzputzes einerseits - wenn auch nur geringfügig - verschlechtern, das Gewicht des Brandschutzputzes andererseits beträchtlich erhöht wird.

Wenn die erfindungsgemäße Baustofftrockenmischung einen Zuschlag aus dichtem Gestein enthält, so weist die Baustofftrockenmischung den Zuschlag aus dichtem Gestein üblicherweise in Mengen von 0,1 bis 10 Gew.-%, insbesondere 0,1 bis 8 Gew.-%, vorzugsweise 0,1 bis 5 Gew.-%, bezogen auf die Baustofftrockenmischung, auf.

Gleichermaßen kann es im Rahmen der vorliegenden Erfindung vorgesehen sein, das die Baustofftrockenmischung außerdem Fasern enthält, insbesondere ausgewählt aus Metallfasern und/oder mineralischen Fasern, vorzugsweise mineralischen Fasern. Mineralische Fasern, wie beispielsweise Glasfasern oder Steinwollfasern, können die Festigkeit des mit der erfindungsgemäßen Baustofftrockenmischung erhältlichen Brandschutzputzes erheblich verbessern und insbesondere die Rissbildung minimieren, ohne die Brandschutzeigenschaften nennenswert zu verschlechtern.

In diesem Zusammenhang hat es sich bewährt, wenn die Baustofftrockenmischung die Fasern in Mengen von 5 bis 20 Gew.-%, insbesondere 8 bis 17 Gew.-%, vorzugsweise 10 bis 15 Gew.-%, bezogen auf die Baustofftrockenmischung, aufweist. Es wird jedoch im Rahmen der vorliegenden Erfindung bevorzugt, wenn die Baustofftrockenmischung keine Fasern aufweist, da der resultierende Brandschutzputz ohne Fasern deutlich einfacher zu verarbeiten ist.

Darüber hinaus kann es im Rahmen der vorliegenden Erfindung vorgesehen sein, dass die Baustofftrockenmischung mindestens ein Additiv, insbesondere mindestens ein Zusatzmittel, enthält. In diesem Zusammenhang werden besonders gute Ergebnisse erhalten, wenn das Additiv ausgewählt ist aus der Gruppe von Verflüssigern, Verdickern, Verzögerern, Beschleunigern, Stabilisierungsmitteln (Stabilisatoren), Rheologiestellmitteln, Zusatzmitteln zur Einstellung des Wasserrückhaltevermögens (Wasserretentionsmitteln), Dispergiermitteln, Dichtungsmitteln, Luftporenbildnern sowie deren Mischungen.

Falls die erfindungsgemäße Baustofftrockenmischung ein Additiv enthält, so enthält die Baustofftrockenmischung das Additiv üblicherweise in Mengen von 0,01 bis 10 Gew.-%, insbesondere 0,1 bis 5 Gew.-%, vorzugsweise 0,3 bis 3 Gew.-%, bevorzugt 0,5 bis 1 Gew.-%, bezogen auf die Baustofftrockenmischung.

Gemäß einer bevorzugten Ausführungsform der vorliegenden Erfindung enthält die Baustofftrockenmischung
(A) die Kieselsäure in Mengen von 20 bis 40 Gew.-%, bezogen auf die Baustofftrockenmischung,
(B) mindestens einen Leichtzuschlag, insbesondere geblähten Perlit, in Mengen von 5 bis 60 Gew.-%, insbesondere 10 bis 50 Gew.-%, vorzugsweise 15 bis 45 Gew.-%, bevorzugt 20 bis 40 Gew.-%, besonders bevorzugt 25 bis 35 Gew.-%, bezogen auf die Baustofftrockenmischung,
(C) mindestens ein zementbasiertes Bindemittel in Mengen von 1 bis 79 Gew.-%, insbesondere 3 bis 50 Gew.-%, vorzugsweise 5 bis 40 Gew.-%, bevorzugt 8 bis 30 Gew.-%, besonders bevorzugt 10 bis 25 Gew.-%, bezogen auf die Baustofftrockenmischung,
(D) mindestens ein kalkbasiertes Bindemittel in Mengen von 1 bis 79 Gew.-%, insbesondere 5 bis 60 Gew.-%, vorzugsweise 10 bis 50 Gew.-%, bevorzugt 15 bis 45 Gew.-%, besonders bevorzugt 20 bis 40 Gew.-%, bezogen auf die Baustofftrockenmischung, und
(E) mindestens ein Additiv in Mengen von 0,01 bis 10 Gew.-%, insbesondere 0,1 bis 5 Gew.-%, vorzugsweise 0,3 bis 3 Gew.-%, bevorzugt 0,5 bis 1 Gew.-%, bezogen auf die Baustofftrockenmischung.

Was die Schüttdichte der erfindungsgemäßen Baustofftrockenmischung anbelangt, so kann diese gleichfalls in weiten Bereichen variieren. Üblicherweise weist die erfindungsgemäße Baustofftrockenmischung jedoch eine Schüttdichte im Bereich 250 bis 750 kg/m³, insbesondere 300 bis 700 kg/m³, vorzugsweise 300 bis 650 kg/m³, bevorzugt 300 bis 600 kg/m³, auf.

Weiterer Gegenstand der vorliegenden Erfindung - gemäß einem **zweiten** Aspekt der vorliegenden Erfindung - ist die Verwendung einer Baustofftrockenmischung, wie zuvor beschrieben, zur Herstellung eines Brandschutzputzes, vorzugsweise zur Verbesserung des Brandschutzes von Bauwerken, insbesondere von Industrieanlagen oder Tunneln.

Für weitergehende Einzelheiten zu der erfindungsgemäßen Verwendung kann auf die vorhergehenden Ausführungen zu der erfindungsgemäßen Baustofftrockenmischung verwiesen werden, welche in Bezug auf die erfindungsgemäße Verwendung entsprechend gelten.

Wiederum weiterer Gegenstand der vorliegenden Erfindung - gemäß einem **dritten** Aspekt der vorliegenden Erfindung - ist ein Brandschutzputz, welcher aus der zuvor beschriebenen Baustofftrockenmischung, insbesondere dem zuvor beschriebenen Putzmörtel, erhältlich ist.

Vorzugsweise ist der Brandschutzputz in Form eines Putzmörtels durch Anmachen mit Wasser der zuvor beschriebenen Baustofftrockenmischung, insbesondere des zuvor beschriebenen Putzmörtels, erhältlich.

Für weitergehende Einzelheiten zu diesem Erfindungsaspekt kann auf die Ausführungen zu den vorherigen Aspekten verwiesen werden, welche in Bezug auf den erfindungsgemäßen Brandschutzputz entsprechend gelten.

Weiterer Gegenstand der vorliegenden Erfindung - gemäß einem **vierten** Aspekt der vorliegenden Erfindung - ist ein Brandschutzputz, welcher mindestens 20 Gew.-% Kieselsäure, wobei die Kieselsäure pyrogene Kieselsäure ist und Teilchengrößen im Bereich von 5 bis 250 µm aufweist, und mindestens einen Leichtzuschlag, wobei der Leichtzuschlag Korngrößen von höchstens 4 mm aufweist, enthält. Vorzugsweise ist der Brandschutzputz aus der erfindungsgemäßen Baustofftrockenmischung erhältlich, insbesondere wie zuvor beschrieben.

Üblicherweise weist der ausgehärtete Brandschutzputz die Brennbarkeit A1 gemäß DIN 4102 auf. Dies bedeutet, dass der erfindungsgemäße Brandschutzputz nicht brennbar ist und keine brennbaren organischen Materialien enthält, sondern vorzugsweise rein anorganisch aufgebaut ist.

Gemäß einer bevorzugten Ausführungsform der vorliegenden Erfindung weisen Wände, welche mit dem erfindungsgemäßen Brandschutzputz in eine Schichtdicke von 50 mm beschichtet sind, die Feuerwiderstandsklasse REI-M 90 gemäß EN 13501 auf. Brandschutzwände, welche mit dem erfindungsgemäßen Brandschutzputz beschichtet sind, behalten somit im Brandfall ihre Funktion vorzugsweise über mindestens 90 Minuten. Die beschichteten Wände behalten ihre Tragfähigkeit, können sowohl Raumabschluss als auch Wärmedämmung unter Brandeinwirkung gewährleisten und bleiben auch unter mechanischer Einwirkung auf die Wände, insbesondere Stoßbeanspruchung, stabil. Dies wird durch die Buchstaben R (**Resistance,** entsprechend Tragfähigkeit), E (**Etanchéité,** entsprechend Raumabschluss), I (**Isolation,** entsprechend Wärmedämmung unter Brandeinwirkung) und M (**Mechanical,** entsprechend der mechanischen Einwirkung auf Wände) zum Ausdruck gebracht. Mit dem erfindungsgemäßen Brandschutzputz lassen sich somit feuerfeste Bauteile und Brandschutzwände erstellen.

Gemäß einer bevorzugten Ausführungsform der vorliegenden Erfindung genügt der ausgehärtete Brandschutzputz den Anforderungen des Rijkswaterstaat-Tests (RWS-Tests). Der Rijkswaterstaat-Test, welcher die Anforderungen der niederländischen Baubehörden an Tunnelbauten wiedergibt und als Brandschutztest mit den höchsten Anforderungen in Europa gilt, simuliert ein Brandunglück mit einem Tanklastzug in einem Tunnel. Es wird dabei von einer Gesamtenergieentwicklung von 300 mW über einen Zeitraum von zwei Stunden ausgegangen, wobei eine Maximaltemperatur von 1.350 °C erreicht wird, und die Temperatur nach fünf Minuten bereits 1.100 °C beträgt. Das spezielle Temperaturprofil des RWS-Tests ist in der RWS-Temperatur-Zeitkurve zusammengefasst. Unter dem Temperaturbelastungsprofil des RWS-Tests darf sich die Betonoberfläche an der Grenzfläche Beton/Brandschutzputz auf max. 380 °C erwärmen, während in der Bewehrungslage, d. h. in dem Betonabschnitt mit der Stahlbewehrung, 30 mm innerhalb der Betonschicht lediglich Temperaturen von max. 250 °C erzielt werden dürfen.

Es hat sich gezeigt, dass die Anforderungen des RWS-Tests bereits mit Schichtdicken des erfindungsgemäßen Brandschutzputzes von 25 mm erfüllt werden können. Der erfindungsgemäße Brandschutzputz genügt somit selbst in dieser Schichtdicke höchsten Anforderungen.

Üblicherweise weist der ausgehärtete Brandschutzputz eine Druckfestigkeit von 2 bis 15 N/mm², insbesondere 2 bis 10 N/mm², vorzugsweise 2,5 bis 8 N/mm², bevorzugt 3 bis 6 N/mm², auf. Der erfindungsgemäße Brandschutzputz weist somit nicht nur hervorragende wärmeisolierende und brandhemmende Eigenschaften auf, sondern ist darüber hinaus auch mechanisch belastbar.

Was nun den Wasserdampfdiffusionswiderstand des erfindungsgemäßen Brandschutzputzes anbelangt, so kann dieser naturgemäß in weiten Bereichen variieren. Es hat sich jedoch bewährt, wenn der ausgehärtete Brandschutzputz eine Wasserdampfdiffusionswiderstandszahl µ, bestimmt nach DIN EN ISO 12542, im Bereich von 0,5 bis 6, insbesondere 1 bis 5, vorzugsweise 2 bis 4, aufweist.

Darüber hinaus werden besonders gute Ergebnisse erhalten, wenn der ausgehärtete Brandschutzputz einen Wasseraufnahmekoeffizienten w im Bereich von 0,5 bis 8,0 kg/m²h^{0,5}, insbesondere 0,6 bis 5,0 kg/m²h^{0,5}, vorzugsweise 0,8 bis 3,0 kg/m²h^{0,5}, bevorzugt 1 bis 2,5 kg/m²h^{0,5}, aufweist.

Darüber hinaus kann es vorgesehen sein, dass der ausgehärtete Brandschutzputz eine Wärmeleitfähigkeit im Bereich von 0,040 bis 0,150 W/(mK), insbesondere 0,05 bis 0,125 W/(mK), vorzugsweise 0,06 bis 0,100 W/(mK), aufweist.

Üblicherweise weist der ausgehärtete Brandschutzputz eine Trockenrohdichte im Bereich von 250 bis 750 kg/m³, insbesondere 300 bis 700 kg/m³, vorzugsweise 300 bis 600 kg/m³, auf. Der erfindungsgemäße Brandschutzputz kann folglich auch mit hohen Schichtdicken auf Bauwerke, insbesondere Wände aufgebracht werden, ohne dass das Gesamtgewicht der Konstruktion zu stark ansteigt.

Was nun die Schichtdicke anbelangt, mit welcher der erfindungsgemäße Brandschutzputz auf eine Fläche aufgetragen ist, so kann diese gleichfalls in Abhängigkeit von den jeweiligen Anforderungen in weiten Bereichen variieren. Üblicherweise wird ist der ausgehärtete Brandschutzputz jedoch mit einer Schichtdicke von 1 bis 14 cm, insbesondere 1 bis 10 cm, vorzugsweise 1 bis 8 cm, bevorzugt 2 bis 7 cm, besonders bevorzugt 3 bis 6 cm, auf eine Fläche, insbesondere eines Bauwerks, vorzugsweise eine Tunnelwand, aufgebracht. Mit den vorgenannten Schichtdicken lassen sich hervorragende Brandschutzergebnisse erzielen.

Wie zuvor ausgeführt, ist der erfindungsgemäße Brandschutzputz üblicherweise durch Anmachen einer Baustofftrockenmischung mit Wasser erhältlich. Hier wird es im Rahmen der vorliegenden Erfindung bevorzugt, wenn der Brandschutzputz durch Anmachen einer Baustofftrockenmischung mit Wasser in Mengen von 30 bis 70 Gew.-%, insbesondere 40 bis 65 Gew.-%, vorzugsweise 50 bis 60 Gew.-%, bezogen auf den Brandschutzputz, erhältlich ist. Die vorgenannten Gewichtsangaben beziehen sich nicht auf den ausgehärteten Brandschutzputz, sondern den mit Wasser angemachten Putz.

Gleichfalls ist es im Rahmen der vorliegenden Erfindung möglich, dass der Brandschutzputz durch Anmachen mit Wasser in Mengen von 0,9 bis 1,9 I Wasser, insbesondere 1,0 bis 1,7 I Wasser, vorzugsweise 1,1 bis 1,6 I Wasser, bevorzugt 1,2 bis 1,5 I Wasser, bezogen auf 1 kg Baustofftrockenmischung, erhalten wird.

Durch das Anmachen einer Baustofftrockenmischung mit Wasser kann der Wasser/Feststoff-Wert (w/f-Wert) des erfindungsgemäßen Brandschutzputzes in weiten Bereichen eingestellt werden. Besonders gute Ergebnisse werden jedoch erhalten, wenn der Brandschutzputz einen Wasser/Feststoff-Wert (w/f-Wert) im Bereich von 0,8 bis 2,0, insbesondere 1,0 bis 1,8, vorzugsweise 1,2 bis 1,5, aufweist.

Für weitergehende Einzelheiten zu dem erfindungsgemäßen Brandschutzputz kann auf die vorangehenden Ausführungen zu den übrigen Erfindungsaspekten verwiesen werden welche in Bezug auf den erfindungsgemäßen Brandschutzputz entsprechend gelten.

Wiederum weiterer Gegenstand der vorliegenden Erfindung - gemäß einem **fünften** Aspekt der vorliegenden Erfindung - ist die Verwendung eines Brandschutzputzes, wie zuvor beschrieben, zur Verbesserung des Brandschutzes von Gebäuden, insbesondere von Industrieanlagen oder Tunneln.

Für weitergehende Einzelheiten zu der erfindungsgemäßen Verwendung eines Brandschutzputzes kann auf die vorherigen Ausführungen zu den übrigen Erfindungsaspekten verwiesen werden, welche in Bezug auf die erfindungsgemäße Verwendung entsprechend gelten.

Wiederum weiterer Gegenstand - gemäß einem **sechsten** Aspekt der vorliegenden Erfindung ist ein Brandschutzprofil, insbesondere eine Brandschutzplatte, welche aus einem zuvor beschriebenen Brandschutzputz oder einer zuvor beschriebenen Baustofftrockenmischung erhältlich ist.

Es ist eine Besonderheit des erfindungsgemäßen Brandschutzputzes bzw. der erfindungsgemäßen Baustofftrockenmischung, dass sie auch zu Brandschutzprofilen verarbeitet werden können, welche nachträglich in Bauwerken, beispielsweise in Tunnelwandungen, eingesetzt werden.

Im Rahmen der vorliegenden Erfindung ist es üblicherweise vorgesehen, dass das Brandschutzprofil, insbesondere die Brandschutzplatte, eine Dicke von 2 bis 14 cm, insbesondere 2 bis 10 cm, vorzugsweise 2,5 bis 8 cm, bevorzugt 2,5 bis 7 cm, besonders bevorzugt 3 bis 6 cm, aufweist. Mit Plattendicken in den vorgenannten Bereichen lassen sich hervorragende Brandschutzeigenschaften verwirklichen, wobei gleichzeitig eine gute mechanische Belastbarkeit gegeben ist.

Für weitergehende Einzelheiten zu dem erfindungsgemäßen Brandschutzprofil kann auf die vorangehenden Ausführungen zu den übrigen Erfindungsaspekten verwiesen werden, welche in Bezug auf das erfindungsgemäße Brandschutzprofil entsprechend gelten.

Schließlich ist wiederum weiterer Gegenstand der vorliegenden Erfindung - gemäß einem **siebten** Aspekt der vorliegenden Erfindung - die Verwendung des zuvor beschriebenen Brandschutzprofils zur Verbesserung des Brandschutzes in Bauwerken, insbesondere Industrieanlagen oder Tunneln.

Für weitergehende Einzelheiten zu der erfindungsgemäßen Verwendung eines Brandschutzprofils kann auf die vorangehenden Ausführungen zu den übrigen Erfindungsaspekten verwiesen werden, welche in Bezug auf die erfindungsgemäße Verwendung entsprechend gelten.

Der Gegenstand der vorliegenden Erfindung wird nachfolgend durch die Ausführungsbeispiele in exemplarischer und nicht beschränkender Weise erläutert.

### Ausführungsbeispiele

Nachfolgend wird das Brandschutzverhalten des erfindungsgemäßen Brandschutzputzes mit Hilfe des Rijkswaterstaat-Tests (RWS-Tests) untersucht.

Für die durchgeführten Untersuchungen wird ein Trockenmörtel mit folgender Zusammensetzung verwendet:

| | |
|---|---|
| Pyrogene Kieselsäure BET-Oberfläche: 80 bis 200 m²/g Teilchengröße: 25 bis 100 µm | 28 Gew.-% |
| Geblähter Perlit Korngröße: 1 bis 3 mm | 26 Gew.-% |
| Weißzement | 12 Gew.-% |
| Hydraulischer Kalk | 33 Gew.-% |
| Additive | 1 Gew.-% |

50 kg des Trockenmörtels werden mit 60 I Wasser angemacht, wobei 50 I Frischmörtel erhalten werden.

Eine 2 m x 2 m große Stahlbetonplatte wird in vier gleich große, das heißt 50 cm x 50 cm großen, Abschnitte unterteilt und in jeweils unterschiedlichen Schichtdicken mit dem Brandschutzputz beaufschlagt. Die Schichtdicken betragen 2,5 cm, 4 cm, 6 cm und 8 cm.

Der Brandschutzputz härtet 4 Wochen bei einer Temperatur von 23 °C aus. Der resultierende ausgehärtete Brandschutzputz weist anschließend eine Druckfestigkeit von 5,2 N/mm² auf.

Zur Temperaturmessung während des RWS-Tests sind die Prüfabschnitte mit Thermoelementen an der Grenzfläche Beton/Brandschutzputz sowie 30 mm innerhalb der Betonplatte in der Stahlbewehrungsschicht versehen. Die Betonplatte wird einer Temperaturbelastung gemäß der Rijkswaterstaat-Zeit-Temperaturkurve ausgesetzt. Während der zweistündigen Testdauer darf die Temperatur an der Grenzfläche Beton/Brandschutzputz nicht über 380 °C und in der Stahlbewehrungslage nicht über 250 °C stiegen.

Die folgenden Werte werden bei einer Spitzentemperaturbelastung von 1.358 °C erreicht.

**Tabelle 1: Gemessene Höchsttemperaturen im RWS-Test bei einer maximalen Brandraumtemperatur von 1.358 °C**

| | **Temperaturen [°C]** | |
|---|---|---|
| Dicke Brandschutzputz | Grenzfläche Beton/Brandschutzputz | Bewehrung |
| 25 mm | 98 | 73 |
| 40 mm | 77 | 58 |
| 60 mm | 53 | 41 |
| 80 mm | 41 | 29 |

Der zuvor geschilderte Versuch wird mit einer weiteren beschichteten stahlbewehrten Betonplatte wiederholt, welche entsprechend dem zuvor beschriebenen Versuch hergestellt wird. Mit dieser weiteren Betonplatte wird ein Brandversuch durchgeführt, wobei die Höchsttemperaturen im Brandraum 1.413 °C betrugen.

**Tabelle 2: Gemessene Höchsttemperaturen im RWS-Test bei einer maximalen Brandraumtemperatur von 1.413 °C**

| | **Temperaturen [°C]** | |
|---|---|---|
| Dicke Brandschutzputz | Grenzfläche Beton/Brandschutzputz | Bewehrung |
| 25 mm | 103 | 78 |
| 40 mm | 80 | 59 |
| 60 mm | 53 | 43 |
| 80 mm | 42 | 29 |

Es zeigt sich, dass in den durchgeführten Brandversuchen sowohl bei einer Temperatur von 1.358 °C als auch bei einer Brandraumtemperatur von 1.413 °C die Erfordernisse des RWS-Tests erfüllt sind. Selbst bei Temperaturen von über 1.400 °C übersteigt die Temperatur an der Grenzfläche von Beton zu Brandschutzputz nur bei Brandschutzputzdichten von 25 mm die Marke von 100 °C und bleibt somit weit unter den im RWS-Test geforderten Grenzwerten.

Auch die noch niedrigeren Werte in der Stahlbewehrungslage zeigen, dass im Rahmen der vorliegenden Erfindung möglich ist, mit dem erfindungsgemäßen Brandschutzputz Stahlbetonkonstruktionen wirkungsvoll vor Brandschäden zu schützen.

## Patentansprüche

1. Baustofftrockenmischung, insbesondere zur Herstellung eines Brandschutzputzes,
**dadurch gekennzeichnet,**
**dass** die Baustofftrockenmischung mindestens 20 Gew.-% Kieselsäure, bezogen auf die Baustofftrockenmischung, aufweist, wobei die Kieselsäure pyrogene Kieselsäure ist und Teilchengrößen im Bereich von 5 bis 250 µm aufweist, und
**dass** die Baustofftrockenmischung mindestens einen Leichtzuschlag enthält,
wobei der Leichtzuschlag Korngrößen von höchstens 4 mm aufweist.

2. Baustofftrockenmischung nach Anspruch 1, **dadurch gekennzeichnet, dass** die Baustofftrockenmischung die Kieselsäure in Mengen von 20 bis 40 Gew.-%, bezogen auf die Baustofftrockenmischung, aufweist.

3. Baustofftrockenmischung nach Anspruch 1 oder 2, **dadurch gekennzeichnet, dass** die Kieselsäure Teilchengrößen im Bereich von 10 bis 200 µm, vorzugsweise 15 bis 180 µm, bevorzugt 20 bis 150 µm, besonders bevorzugt 25 bis 100 µm, aufweist.

4. Baustofftrockenmischung nach einem der vorangehenden Ansprüche, **dadurch gekennzeichnet, dass** der Leichtzuschlag ausgewählt aus der Gruppe von vulkanischem Gestein, Perlit, insbesondere geblähtem Perlit, Vermiculit, insbesondere geblähtem Vermiculit, Bims, Schaum- und Blähglas, Blähton, Blähschiefer, Tuff, Blähglimmer, Lavakies, Lavasand und deren Mischungen, vorzugsweise Perlit und/oder Vermiculit, insbesondere geblähtem Perlit und/oder Vermiculit, bevorzugt Perlit, insbesondere geblähtem Perlit.

5. Baustofftrockenmischung nach einem der vorangehenden Ansprüche, **dadurch gekennzeichnet, dass** der Leichtzuschlag Korngrößen von höchstens 3 mm aufweist.

6. Baustofftrockenmischung nach einem der vorangehenden Ansprüche, **dadurch gekennzeichnet, dass** die Baustofftrockenmischung den Leichtzuschlag in Mengen von 5 bis 60 Gew.-%, insbesondere 10 bis 50 Gew.-%, vorzugsweise 15 bis 45 Gew.-%, bevorzugt 20 bis 40 Gew.-%, besonders bevorzugt 25 bis 35 Gew.-%, bezogen auf die Baustofftrockenmischung, aufweist.

7. Baustofftrockenmischung nach einem der vorangehenden Ansprüche, **dadurch gekennzeichnet, dass** die Baustofftrockenmischung mindestens eine Bindemittelzusammensetzung aufweist,
insbesondere wobei die Baustofftrockenmischung die Bindemittelzusammensetzung in Mengen von 5 bis 80 Gew.-%, insbesondere 15 bis 70 Gew.-%, vorzugsweise 30 bis 60 Gew.-%, bevorzugt 35 bis 55 Gew.-%, besonders bevorzugt 40 bis 50 Gew.-%, bezogen auf die Baustofftrockenmischung, enthält.

8. Baustofftrockenmischung nach einem der vorangehenden Ansprüche, **dadurch gekennzeichnet, dass** die Baustofftrockenmischung
(A) Kieselsäure in Mengen von 20 bis 40 Gew.-%, bezogen auf die Baustofftrockenmischung,
(B) mindestens einen Leichtzuschlag, insbesondere geblähten Perlit, in Mengen von 5 bis 60 Gew.-%, insbesondere 10 bis 50 Gew.-%, vorzugsweise 15 bis 45 Gew.-%, bevorzugt 20 bis 40 Gew.-%, besonders bevorzugt 25 bis 35 Gew.-%, bezogen auf die Baustofftrockenmischung,
(C) mindestens ein zementbasiertes Bindemittel in Mengen von 1 bis 79 Gew.-%, insbesondere 3 bis 50 Gew.-%, vorzugsweise 5 bis 40 Gew.-%, bevorzugt 8 bis 30 Gew.-%, besonders bevorzugt 10 bis 25 Gew.-%, bezogen auf die Baustofftrockenmischung,
(D) mindestens ein kalkbasiertes Bindemittel in Mengen von 1 bis 79 Gew.-%, insbesondere 5 bis 60 Gew.-%, vorzugsweise 10 bis 50 Gew.-%, bevorzugt 15 bis 45 Gew.-%, besonders bevorzugt 20 bis 40 Gew.-%, bezogen auf die Baustofftrockenmischung, und
(E) mindestens ein Additiv in Mengen von 0,01 bis 10 Gew.-%, insbesondere 0,1 bis 5 Gew.-%, vorzugsweise 0,3 bis 3 Gew.-%, bevorzugt 0,5 bis 1 Gew.-%, bezogen auf die Baustofftrockenmischung, enthält.

9. Brandschutzputz, erhältlich aus einer Baustofftrockenmischung, insbesondere einem Putzmörtel, nach einem der vorangehenden Ansprüche, insbesondere wobei der Brandschutzputz durch Anmachen mit Wasser einer Baustofftrockenmischung, insbesondere einem Putzmörtel, gemäß einem der vorangehenden Ansprüche erhältlich ist.

10. Brandschutzputz, enthaltend mindestens 20 Gew.-% Kieselsäure, wobei die Kieselsäure pyrogene Kieselsäure ist und Teilchengrößen im Bereich von 5 bis 250 µm aufweist, und mindestens einen Leichtzuschlag, wobei der Leichtzuschlag Korngrößen von höchstens 4 mm aufweist.

11. Brandschutzputz nach 9 oder 10, **dadurch gekennzeichnet,**
**dass** der ausgehärtete Brandschutzputz die Brennbarkeit A1 gemäß DIN 4102 aufweist und/oder
**dass** mit dem Brandschutzputz mit einer Schichtdicke von 50 mm beschichtete Wände die Feuerwiderstandsklasse REI-M 90 gemäß EN 13501 aufweisen und/oder dass der ausgehärtete Brandschutzputz den Anforderungen des RWS-Tests genügt.

12. Brandschutzputz nach einem der vorangehenden Ansprüche 9 bis 11, **dadurch gekennzeichnet, dass** der ausgehärtete Brandschutzputz mit einer Schichtdicke von 1 bis 14 cm, insbesondere 1 bis 10 cm, vorzugsweise 1 bis 8 cm, bevorzugt 2 bis 7 cm, besonders bevorzugt 3 bis 6 cm, auf eine Fläche, insbesondere eines Bauwerks, vorzugsweise eine Tunnelwand, aufgebracht ist.

13. Verwendung eines Brandschutzputzes nach einem der Ansprüche 9 bis 12 zur Verbesserung des Brandschutzes von Bauwerken, insbesondere von Industrieanlagen oder Tunneln.

14. Brandschutzprofil, insbesondere Brandschutzplatte, erhältlich aus einem Brandschutzputz nach einem der Ansprüche 9 bis 12 oder einer Baustofftrockenmischung nach einem der Ansprüche 1 bis 8.

15. Verwendung eines Brandschutzprofils nach Anspruch 14 zur Verbesserung des Brandschutzes von Bauwerken, insbesondere von Industrieanlagen oder Tunneln.

## Claims

1. Dry building material mixture for the production of fireproof plastering,
**characterised in that**
the dry building material mixture has at least 20% silica by weight in relation to the dry building material mixture, wherein the silica is pyrogenic silica and has particle sizes in the range of 5 to 250 µm, and
that the dry building material mixture contains at least a lightweight aggregate,
wherein the lightweight aggregate has a maximum particle size of 4 mm.

2. Dry building material mixture according to claim 1, **characterised in that** the dry building material mixture has the silica in quantities of 20 to 40% by weight in relation to the dry building material mixture.

3. Dry building material mixture according to claim 1 or 2, **characterised in that** the silica has particle sizes in the range of 10 to 200 µm, preferably 15 to 180 µm, 20 to 150 µm being preferred, 25 to 100 µm being especially preferred.

4. Dry building material mixture according to any of the preceding claims, **characterised in that** the lightweight aggregate is selected from the volcanic rock group perlite, particularly expanded perlite, vermiculite, particularly expanded vermiculite, pumice, cellular and foam glass, expansive clay, expanded shale, tuff, expanded mica, lava chips, lava sand and mixtures of the two, preferably perlite and/or vermiculite, particularly expanded perlite and/or vermiculite, perlite being preferred, particularly expanded perlite.

5. Dry building material mixture according to any of the preceding claims, **characterised in that** the lightweight aggregate has a maximum particle size of 3 mm.

6. Dry building material mixture according to any of the preceding claims, **characterised in that** the dry building material mixture has the lightweight aggregate in quantities of 5 to 60% by weight, particularly 10 to 50% by weight, preferably 15 to 45% by weight, 20 to 40% by weight being preferred, 25 to 35% by weight being especially preferred, in relation to the dry building material mixture.

7. Dry building material mixture according to any of the preceding claims, **characterised in that** the dry building material mixture has at least one binder composite,
particularly wherein the dry building material mixture contains the binder composite in quantities of 5 to 80% by weight, particularly 15 to 70% by weight, preferably 30 to 60% by weight, 35 to 55% by weight being preferred, 40 to 50% by weight being especially preferred, in relation to the dry building material mixture.

8. Dry building material mixture according to any of the preceding claims, **characterised in that** the dry building material mixture
(A) contains silica in quantities of 20 to 40% by weight in relation to the dry building material mixture,
(B) at least one lightweight aggregate, particularly expanded perlite, in quantities of 5 to 60% by weight, particularly 10 to 50% by weight, preferably 15 to 45% by weight, 20 to 40% by weight being preferred, 25 to 35% being especially preferred, in relation to the dry building material mixture,
(C) at least one cement-based binder in quantities of 1 to 79% by weight, particularly 3 to 50% by weight, preferably 5 to 40% by weight, 8 to 30% by weight being preferred, 10 to 25% by weight being especially preferred, in relation to the dry building material mixture,
(D) at least one lime-based binder in quantities of 1 to 79% by weight, particularly 5 to 60% by weight, preferably 10 to 50% by weight, 15 to 45% by weight being preferred, 20 to 40% by weight being especially preferred, in relation to the dry building material mixture, and
(E) at least one additive in quantities of 0.01 to 10% by weight, particularly 0.1 to 5% by weight, preferably 0.3 to 3% by weight, 0.5 to 1% being preferred, in relation to the dry building material mixture.

9. Fireproof plastering, obtainable from a dry building material mixture, particularly a plaster, according to any of the preceding claims, particularly wherein the fireproof plastering is obtainable by mixing a dry building material mixture, particularly a plaster, according to any of the preceding claims, with water.

10. Fireproof plastering containing at least 20% by weight silica, wherein the silica is pyrogenic silica and has particle sizes in the range of 5 to 250 µm, and at least one lightweight aggregate, wherein the lightweight aggregate has a maximum particle size of 4 mm.

11. Fireproof plastering according to claim 9 or 10, **characterised in that** the hardened fireproof plastering has combustibility A1 according to DIN 4102 and/or that walls coated with the fireproof plastering in a layer thickness of 50 mm have the fire resistance class REI-M 90 according to EN 13501 and/or
that the hardened fireproof plastering meets the requirements of the RWS test.

12. Fireproof plastering according to any of claims 9 to 11, **characterised in that** the hardened fireproof plastering is applied in a layer thickness of 1 to 14 cm, particularly 1 to 10 cm, preferably 1 to 8 cm, 2 to 7 cm being preferred, 3 to 6 cm being especially preferred, to a surface, particularly of a structure, preferably a tunnel wall.

13. Use of fireproof plastering according to any of claims 9 to 12 to improve the fireproofing of structures, particularly of industrial plants or tunnels.

14. Fire resistant profile, particularly fireproof board, obtainable from fireproof plastering according to any of claims 9 to 12 or from a dry building material mixture according to any of claims 1 to 8.

15. Use of fireproof plastering according to claim 14 to improve the fireproofing of structures, particularly of industrial plants or tunnels.

## Revendications

1. Mélange sec pour matériau de construction, en particulier pour la fabrication d'un enduit ignifugé,
**caractérisé en ce que**
le mélange sec pour matériau de construction présente au moins 20 % en poids de silice, par rapport au mélange sec pour matériau de construction, dans lequel la silice est une silice pyrolyse et présente une taille de particules dans la plage de 5 à 250 µm et
**en ce que** le mélange sec pour matériau de construction contient au moins un agrégat léger,
dans lequel l'agrégat léger présente une taille de grains de 4 mm maximum.

2. Mélange sec pour matériau de construction selon la revendication 1, **caractérisé en ce que** le mélange sec pour matériau de construction présente la silice en une quantité de 20 à 40 % en poids par rapport au mélange sec pour matériau de construction.

3. Mélange sec pour matériau de construction selon la revendication 1 ou 2, **caractérisé en ce que** la silice présente une taille de particules dans la plage de 10 à 200 µm, de préférence de 15 à 180µm, préférablement de 20 à 150µm, de manière particulièrement préférée de 25 à 100 µm.

4. Mélange sec pour matériau de construction selon une des revendications précédentes, **caractérisé en ce que** l'agrégat léger est choisi dans la groupe constitué par roche volcanique, perlite, notamment perlite expansée, vermiculite, en particulier vermiculite expansée, pierre ponce, verre mousse et expansé, lecaton, argile expansée, tuf, mica expansé, gravier de lave, sable de lave et leurs mélanges, de préférence la perlite et/ou la vermiculite, en particulier la perlite expansée et/ou la vermiculite expansée, de préférence la perlite, notamment la perlite expansée.

5. Mélange sec pour matériau de construction selon une des revendications précédentes, **caractérisé en ce que** l'agrégat léger présente une taille de grains de 3 mm maximum.

6. Mélange sec pour matériau de construction selon une des revendications précédentes, **caractérisé en ce que** le mélange sec pour matériau de construction contient l'agrégat léger en une quantité de 5 à 60 % en poids, en particulier de 10 à 50 % en poids, de préférence de 15 à 45 % en poids, préférablement de 20 à 40 % en poids, de manière particulièrement préférée de 25 à 35 % en poids, par rapport au mélange sec pour matériau de construction.

7. Mélange sec pour matériau de construction selon une des revendications précédentes, **caractérisé en ce que** le mélange sec pour matériau de construction présente au moins une composition d'agent liant,
en particulier dans lequel le mélange sec pour matériau de construction contient la composition d'agent liant en une quantité de 5 à 80 % en poids, en particulier de 15 à 70 % en poids, de préférence de 30 à 60 % en poids, préférablement de 35 à 55 % en poids, de manière particulièrement préférée de 40 à 50 % en poids, par rapport au mélange sec pour matériau de construction.

8. Mélange sec pour matériau de construction selon l'une quelconque des revendications précédentes, **caractérisé en ce que** le mélange sec pour matériau de construction
(A) contient de la silice en une quantité de 20 à 40 % en poids par rapport au mélange sec pour matériau de construction
(B) au moins un agrégat léger, en particulier de la perlite expansée, en une quantité de 5 à 60 % en poids, en particulier de 10 à 50 % en poids, de préférence de 15 à 45 % en poids, préférablement de 20 à 40 % en poids, de manière particulièrement préférée de 25 à 35 % en poids, par rapport au mélange sec pour matériau de construction,
(C) au moins un agent liant à base de ciment en une quantité de 1 à 79 % en poids, en particulier de 3 à 50 % en poids, de préférence de 5 à 40 % en poids, préférablement de 8 à 30 % en poids, de manière particulièrement préférée de 10 à 25 % en poids, par rapport au mélange sec pour matériau de construction,
(D) au moins un agent liant à base de calcaire en une quantité de 1 à 79 % en poids, en particulier de 5 à 60 % en poids, de préférence de 10 à 50 % en poids, préférablement de 15 à 45 % en poids, de manière particulièrement préférée de 20 à 40 % en poids, par rapport au mélange sec pour matériau de construction et
(E) au moins un additif en une quantité de 0,01 à 10 % en poids, en particulier de 0,1 à 5 % en poids, préférablement de 0,3 à 3 % en poids, de préférence de 0,5 à 1 % en poids, par rapport au mélange sec pour matériau de construction.

9. Enduit ignifugé, pouvant être obtenu à partir d'un mélange sec pour matériau de construction, en particulier d'un mortier pour enduit, selon une des revendications précédentes, en particulier dans lequel l'enduit ignifugé peut être obtenu par gâchage à l'eau d'un mélange sec pour matériau de construction, en particulier un mortier pour enduit, selon une des revendications précédentes.

10. Enduit ignifugé, contenant au moins 20 % en poids de silice, dans lequel la silice est la silice pyrolyse et présente une taille de particules dans la plage de 5 à 250 µm et au moins un agrégat léger, dans lequel l'agrégat léger présente une taille de grains de 4 mm maximum.

11. Enduit ignifugé selon l'une des revendications 9 ou 10, **caractérisé en ce que** l'enduit ignifugé durci présente une combustibilité A1 conforme à la norme DIN 4102 et/ou
**en ce que** des parois revêtues de l'enduit ignifugé avec une épaisseur de couche de 50 mm présentent la classe de résistance au feu REI-M 90 selon EN 13501 et/ou en ce que l'enduit ignifugé durci répond aux exigences du test RWS.

12. Enduit ignifugé selon une des revendications précédentes 9 à 11, **caractérisé en ce que** l'enduit ignifugé durci est appliqué sur une surface, en particulier d'une construction, de préférence une paroi de tunnel, avec une épaisseur de couche de 1 à 14 cm, en particulier de 1 à 10 cm, de préférence de 1 à 8 cm, préférablement de 2 à 7 cm, de manière particulièrement préférée de 3 à 6 cm.

13. Utilisation d'un enduit ignifugé selon une des revendications 9 à 12 pour l'amélioration de l'ignifugation de constructions, notamment d'installations industrielles ou de tunnels.

14. Profilé ignifugé, en particulier plaque ignifugée, pouvant être obtenu à partir d'un enduit ignifugé selon une des revendications 9 à 12 ou d'un mélange sec pour matériau de construction selon une des revendications 1 à 8.

15. Utilisation d'un profilé ignifugé selon la revendication 14 pour l'amélioration de l'ignifugation de constructions, notamment d'installations industrielles ou de tunnels.
